# EUROPÄISCHE PATENTSCHRIFT

(11) **EP 0 652 922 B1**
(45) Veröffentlichungstag und Bekanntmachung des Hinweises auf die Patenterteilung: **24.09.1997**
(21) Anmeldenummer: 93915954.7
(22) Anmeldetag: 19.07.1993
(51) Int. Cl.: C09K 7/02, C09K 7/06, C09K 3/00

(54) **MINERALISCHE ADDITIVE ZUR EINSTELLUNG UND/ODER REGELUNG DER RHEOLOGIE UND GELSTRUKTUR WÄSSRIGER FLÜSSIGPHASEN UND IHRE VERWENDUNG**
MINERAL ADDITIVES FOR SETTING AND/OR CONTROLLING THE RHEOLOGICAL PROPERTIES AND GEL STRUCTURE OF AQUEOUS LIQUIDS, AND THE USE OF SUCH ADDITIVES
ADJUVANTS MINERAUX POUR LE REGLAGE ET/OU LA REGULATION DE LA RHEOLOGIE ET DE LA STRUCTURE GELIFIANTE DE PHASES LIQUIDES AQUEUSES ET LEUR UTILISATION

(30) Priorität: 27.07.1992 DE 4224537
(43) Veröffentlichungstag der Anmeldung: 17.05.1995
(73) Patentinhaber: Henkel Kommanditgesellschaft auf Aktien, 40191 Düsseldorf (DE)
(72) Erfinder: MÜLLER, Heinz, D-40789 Monheim (DE); BREUER, Wolfgang, D-41352 Korschenbroich (DE); HEROLD, Claus-Peter, D-40822 Mettmann (DE); KUHM, Peter, D-40724 Hilden (DE); VON TAPAVICZA, Stephan, D-40699 Erkrath (DE)
(86) Internationale Anmeldenummer: EP9301902
(87) Internationale Veröffentlichungsnummer: WO9402566

(56) Entgegenhaltungen:
- EP-A- 0 207 810
- EP-A- 0 260 538
- EP-A- 0 396 983
- EP-A- 0 501 069
- WO-A-92/18238

## Beschreibung

Die Erfindung betrifft das Gebiet der Rheologiesteuerung wäßriger Flüssigphasen unter Mitverwendung von Viskositätsbildnern auf Basis quellfähiger Mineralstoffe natürlichen und/oder synthetischen Ursprungs.

Die Eindickung von wasserbasierten Systemen unter Einsatz feinstteiliger quellbarer Tone und/oder anderer Schichtsilikatverbindungen natürlichen oder synthetischen Ursprungs wird in der Praxis in großem Umfange ausgenutzt. Die unterschiedlichsten Arbeitsbereiche nutzen die hier bestehende Möglichkeit der thixotropen Eindickung der wäßrigen oder wasserbasierten Flüssigphasen. Ohne Anspruch auf Vollständigkeit seien hier benannt die Gebiete der Bearbeitung fester Werkstoffe, insbesondere Metalle, das Einsatzgebiet der Feuerlöschmittel, die Verwendung thixotrop eingedickter Flüssigphasen in wasserbasierten Farben beziehungsweise Anstrichmitteln, hydraulische Flüssigkeiten und dergleichen. Ganz andere Einsatzgebiete finden sich beispielsweise auf dem Gebiet der Herstellung kosmetischer Präparate, bei der Herstellung von wäßrigen Wirkstoffzubereitungen in Form von Salben oder Gelen und zahlreichen anderen Sachgebieten.

In großem Umfange werden mehr oder weniger stark thixotrop eingedickte wasserbasierte Hilfsflüssigkeiten im Rahmen der Technologie geologischer und anderer Bohrungen im Erdreich, aber auch in anderem Zusammenhang, z. B. als Erdreichstütze bei Ausschachtungen, insbesondere im Schlitzwandbau, Schacht-, Brunnen- und Senkkasten-Absenkungen, bei Rohrdurchpressungen und dergleichen, verwendet. Eine Literaturstelle zur bautechnischen Anwendung thixotroper Flüssigsysteme ist beispielsweise F. Weiss "Die Standfestigkeit flüssigkeitsgestützter Erdwände" in Bauingenieur-Praxis, Heft 70 (1967), Verlag W. Ernst & Sohn, Berlin-München. Wasserbasierte Bohrspülsysteme, die durch den Zusatz von mineralischen Viskositätsbildnern hinreichend eingedickt sind, ohne dabei ihre Fließ- und Pumpfähigkeit unter Scherbeanspruchung zu verlieren und - der jeweiligen Situation angepaßt - zusätzliche gelöste, emulgierte und/oder suspendierte Hilfsstoffe enthalten, werden in breitem Umfang eingesetzt. Aber auch zahlreiche andere flüssige Hilfsmittel des hier betroffenen Arbeitsgebietes - bekannt beispielsweise unter den Fachbegriffen Stimulierung, Fracturing, Spotting oder einfach zur Reinigung - sind wasserbasierte und unter Mitverwendung anorganischer Viskositätsbildner der hier betroffenen Art eingedickte Flüssigphasen, verwiesen sei beispielsweise auf die druckschriftlichen Veröffentlichungen MANUAL OF DRILLING FLUIDS TECHNOLOGY, 1985, NL Baroid/NL Industries, Inc. sowie A.T. Bourgoyne Jr. et al "Applied Drilling Engineering" Society of Petroleum Engineers Richardson, Tx, 1986.

Die Erfindungsbeschreibung wird im nachfolgenden weitgehend anhand derartiger Hilfsflüssigkeiten des Arbeitsgebietes der Bohrungen im Erdreich geschildert, ist in ihrer Anwendbarkeit aber nicht darauf beschränkt. Auch der Begriff der Erdbereichsbohrungen ist dabei weit zu verstehen und umfaßt sowohl den Bereich des Aufschlusses geologischer Vorkommen, wie Erdöl und/oder Erdgas, als auch beliebige technische Hilfsbohrungen, beispielsweise Untertunnelungen, das sogenannte River Crossing, die Erschließung von Deponie-Bereichen, das Wasser-Bohren und dergleichen.

Die zur Rheologiekontrolle im Rahmen von wäßrigen Bohrspülungen eingesetzten mineralischen Viskositätsbildner sind quellfähige Tone natürlichen und/oder synthetischen Ursprungs. Als Beispiele seien entsprechende Smectite wie Montmorillonit, Bentonit, Beidelitt, Hectorit, Saponit und Stevensit benannt. Attapulgit ist ein weiteres wichtiges wasserquellbares Hilfsmittel der hier betroffenen Art. Eine Reihe von Vorschlägen beschäftigen sich mit der synthetischen Herstellung feinteiliger Ton-ähnlicher Mineralien, insbesondere entsprechender Verbindungen des Hectorit- und/oder Saponit-Typs. Verwiesen sei auf die DE-A-16 67 502 und insbesondere die EP-B-0 260 538. Die Offenbarung insbesondere der zuletzt genannten Druckschrift, die eine Entwicklung der Anmelderin beschreibt, wird hiermit gleichzeitig auch zum Offenbarungsinhalt der vorliegenden Erfindung gemacht.

Durch Auswahl geeigneter natürlicher oder synthetischer quellfähiger Mineralien gelingt eine sehr weitgehende Steuerung der jeweils geforderten rheologischen Eigenschaften, die sich zahlenmäßig bekanntlich insbesondere in der Plastischen Viskosität (PV), der Fließgrenze beziehungsweise Yield Point (YP) und der Gelstärke - bestimmt jeweils vor und nach Alterung unter Standardbedingungen - erfassen lassen. Einzelheiten hierzu finden sich beispielsweise in der zuvor benannten Druckschrift MANUAL OF DRILLING FLUIDS TECHNOLOGY der NL Baroid.

Gegenstand der EP-A-0 207 810 sind mineralisch basierte Wirkstoffsysteme für den Viskositätsaufbau in wasserbasierten Flüssigphasen. Gemeinsam sollen hier die an sich bekannten wasserquellenden Schichtsilikate wie Tone von der Art des Natriumbentonits oder Attapulgits mit ausgewählten synthetischen mineralischen Mischoxiden zum Einsatz kommen, die sich durch eine ganz bestimmte individuelle Struktur auszeichnen. Dieses als entscheidungserheblich herausgestellte Strukturmerkmal ist die kristalline Einschicht-Struktur der Mischmetallhydroxide pro Grundeinheit (Unit Cell). In einem flüssigen Träger sollen diese Schichtkristalle "mono-dispergiert" vorliegen, so daß die individuellen Kristalle jeweils voneinander getrennte Schichten der Mischmetallhydroxidverbindungen ausbilden.

Die Lehre der EP-A-0 207 810 beruht auf der Erkenntnis, daß zur Einschicht-Lage individualisierte Mischkristalle der hier betroffenen Art mit den üblicherweise zur Viskositätsausbildung eingesetzten quellfähigen Tonen in Interaktion treten können, dabei Einfluß auf die rheologischen Eigenschaften der wasserbasierten eingedickten Flüssigphase nehmen, gleichzeitig aber auch noch weiterführende in der Praxis gewünschte Effekte begünstigen, beispielsweise eine Toninhibierung bewirken können. Einzelheiten zu der Beschaffenheit und Wirkungsweise dieser als "Mixed Metal Layered Hydroxide Compounds (MMLHC)" bezeichneten mineralischen Hilfsmittel synthetischen Ursprungs finden sich in der Veröffentlichung J.L. Burba III et al "Laboratory and Field Evaluation of Novel Inorganic Drilling Fluid Additive" IADC/SPE 17198, Seiten 179 - 186.

Die im nachfolgenden beschriebene Erfindung geht von der Aufgabe aus eine Klasse mineralischer Hilfsstoffe zu beschreiben, die - ähnlich wie im Rahmen der Lehre der zuletzt diskutierten Literaturstelle - als Zusatzstoffe in wäßrigen oder wasserbasierten Flüssigphasen eingesetzt werden können und dort im Zusammenwirken mit an sich bekannten quellfähigen mineralischen Viskositätsbildnern natürlichen und/oder synthetischen Ursprungs gezielt das Eigenschaftsbild der verdickten Flüssigphase beeinflussen. Die im nachfolgenden geschilderte technische Lehre der Erfindung geht von der überraschenden Feststellung aus, daß eine solche - und dabei in vielfacher Hinsicht verbesserte - Steuerung der Eigenschaften eingedickter wäßriger Phasen mit einer Klasse mineralischer Verbindungen möglich ist, die sich grundlegend von den Einschicht-Kristallen vom MMLHC-Typ unterscheiden.

Die erfindungsgemäße Lehre baut auf der überraschenden Erkenntnis auf, daß feinteilige mineralische Hilfsstoffe vom Strukturtyp der Granate mit raumerfüllender 3-dimensionaler Raumnetzstruktur wirkungsvolle Hilfsmittel im Sinne der erfindungsgemäßen Aufgabenstellung sein können und dabei im Eigenschaftsbild der eingedickten wäßrigen Flüssigphasen zu einer bisher nicht bekannten Kombination erwünschter Stoffeigenschaften führen können.

### Gegenstand der Erfindung

Die Erfindung betrifft dementsprechend in einer ersten Ausführungsform die Verwendung von bevorzugt feinstteiligen und festen Mischhydroxidverbindungen 2-wertiger und 3-wertiger Metalle mit 3-dimensionaler Raumnetzstruktur vom Granat-Typ der nachfolgenden allgemeinen Formel (I)

M^{II} ₐ M^{III} _{b} (OH)_{2a+3b-n^{·}m}Aⁿ ₘ (I)

in der bedeuten:
- M^{II}:: Ca, Mg, Zn, Cu, Ba, Sr, Fe, Mn und/oder Co
- M^{III}:: Al, Fe, Cr und/oder Ga
- A:: 1- und/oder mehrwertige Säurereste mit der Wertigkeit n, bevorzugt Halogenid, Sulfat, Nitrat, Carbonat, Silikat, Phosphat oder Borat
- a:: eine Zahl von 2 bis 4, bevorzugt etwa 3,
- b:: eine Zahl von 1 bis 3, bevorzugt etwa 2,
wobei weiterhin gilt
- a:b: ist eine Zahl im Bereich von 1:1 bis 3:1, bevorzugt etwa 3:2 sowie
- n^{·}m: ist eine Zahl von 0 bis 6, bevorzugt eine Zahl kleiner 4 und insbesondere eine Zahl kleiner 1
als Regler der thixotropen Eindickung wäßriger Zubereitungen mittels quellfähiger Tone und/oder anderer quellfähiger Schichtsilikatverbindungen natürlichen und/oder synthetischen Ursprungs.

Gegenstand der Lehre der Erfindung sind weiterhin Additive zur Einstellung und/oder Regelung der Rheologie und Gelstärke wäßriger Flüssigphasen, die unter Mitverwendung synthetischer und/oder natürlicher Mineralverbindungen, insbesondere quellfähiger Tone und/oder anderer Schichtsilikatverbindungen bevorzugt thixotrop eingedickt sind, dadurch gekennzeichnet, daß sie als Regler feinstteilige Mischhydroxidverbindungen 2-wertiger und 3-wertiger Metalle mit dreidimensionaler Raumnetzstruktur vom Granat-Typ der nachfolgenden Formel (I)

M^{II} ₐ M^{III} _{b} (OH)_{2a+3b-n^{·}m}Aⁿ ₘ (I)

in der bedeuten:
- M^{II}:: Ca, Mg, Zn, Cu, Ba, Sr, Fe, Mn und/oder Co
- M^{III}:: Al, Fe, Cr und/oder Ga
- A:: 1- und/oder mehrwertige Säurereste mit der Wertigkeit n, bevorzugt Halogenid, Sulfat, Nitrat, Carbonat, Silikat, Phosphat oder Borat
- a:: eine Zahl von 2 bis 4, bevorzugt etwa 3,
- b:: eine Zahl von 1 bis 3, bevorzugt etwa 2,
wobei weiterhin gilt
- a:b: ist eine Zahl im Bereich von 1:1 bis 3:1, bevorzugt etwa 3:2 sowie
- n^{·}m: ist eine Zahl von 0 bis 6, bevorzugt eine Zahl kleiner 4 und insbesondere eine Zahl kleiner 1
sowie weitere anorganische und/oder organische Hilfsstoffe zur Einstellung und/oder Regulierung des Fließverhaltens beziehungsweise der Vergelung wäßriger Phasen enthalten.

Die erfindungsgemäßen Additive - im nachfolgenden auch häufig als "Regler" bezeichnet - enthalten als essentielle Komponente feinstteilige Mischhydroxidverbindungen ausgewählter 2-wertiger und 3-wertiger Metalle mit 3-dimensionaler Raumnetzstruktur vom Granat-Typ, wobei ein Anteil der OH-Funktionen dieser Granatstruktur auch durch 1- und/oder mehrwertige Säurereste ausgetauscht sein kann. Die Regler der angegebenen Art können dabei in Abmischung mit weiteren anorganischen und/oder organischen Hilfsstoffen zur Einstellung und/oder Regulierung des Fließverhaltens beziehungsweise der Vergelung wäßriger Phasen vorliegen beziehungsweise eingesetzt werden. Die wichtigsten Regler im Sinne der Erfindung sind Verbindungen aus dem Phasenbereich der Katoite, und dabei insbesondere synthetischen Ursprungs der im nachfolgenden im einzelnen definierten Art.

Die Erfindung betrifft in einer weiteren besonders wichtigen Ausführungsform wasserbasierte und mit Viskositätsbildnern auf Basis quellfähiger Tonmineralien beziehungsweise Schichtsilikate natürlichen und/oder synthetischen Ursprungs eingedickte sowie gewünschtenfalls weitere gelöste, emulgierte und/oder suspendierte Hilfsstoffe enthaltende fließ- und pumpfähige Arbeitsmittel, insbesondere Hilfsflüssigkeiten für den Einsatz im Rahmen von Erdreich-Ausschachtungen und/oder Erdreichbohrungen, wobei diese Arbeitsmittel zusammen mit den quellfähigen Viskositätsbildnern Mischhydroxidverbindungen 2-wertiger und 3-wertiger Metalle mit 3-dimensionaler Raumnetzstruktur vom Granat-Typ der nachfolgenden Formel (I) enthalten,

M^{II} ₐ M^{III} _{b} (OH)_{2a+3b-n^{·}m}Aⁿ ₘ (I)

in der bedeuten:
- M^{II}:: Ca, Mg, Zn, Cu, Ba, Sr, Fe, Mn und/oder Co
- M^{III}:: Al, Fe, Cr und/oder Ga
- A:: 1- und/oder mehrwertige Säurereste mit der Wertigkeit n, bevorzugt Halogenid, Sulfat, Nitrat, Carbonat, Silikat, Phosphat oder Borat
- a:: eine Zahl von 2 bis 4, bevorzugt etwa 3,
- b:: eine Zahl von 1 bis 3, bevorzugt etwa 2,
wobei weiterhin gilt
- a:b: ist eine Zahl im Bereich von 1:1 bis 3:1, bevorzugt etwa 3:2 sowie
- n^{·}m: ist eine Zahl von 0 bis 6, bevorzugt eine Zahl kleiner 4 und insbesondere eine Zahl kleiner 1.

### Einzelheiten zur erfindungsgemäßen Lehre

Synthetische und/oder natürliche Mineralstoffe vom Typ der kristallinen Granatstruktur sind in ihrem 3-dimensionalen raumerfüllenden Aufbau beispielsweise dargestellt in Deer, Howie and Zussman "Rock forming Minerals Orthosilicates" Vol 1A, 2. Edition, Verlag Langman, London und New York 1982, Unterkapitel "Garnet Group", Seiten 468 - 475.

Im Zusammenhang mit der erfindungsgemäßen Lehre eignen sich insbesondere entsprechende Verbindungen mit Granatstruktur, die dem Phasenbereich der Katoite zuzuordnen sind, vergleiche hierzu die Veröffentlichung E. PASSAGLIA et al "Katoite, a new member of the Ca₃Al₂(SiO₄)₃-Ca₃Al₂(OH)₁₂ series and a new nomenclature for the hydrogrossular group of minerals" Bull.Mineral (1984), 107, 605-618, siehe insbesondere das Unterkapitel "Discussion and Nomenclature" a.a.O. 614 - 616.

Der vollständig SiO₄-freie synthetische Katoit der Grundstruktur Ca₃Al₂(OH)₁₂ ist ebenso wie der durch vollständigen Austausch beziehungsweise Ersatz der Hydroxylgruppen durch SiO₄-Einheiten gebildete Grossular Ca₃Al₂(SiO₄)₃ und die dazwischen liegenden Minerale mit partiellem Austausch der SiO₄- gegen OH-Gruppen ein Mineral mit Granatstruktur, das sich durch ein ganz bestimmtes Kristallgitter auszeichnet, sich damit von anderen Calcium-Aluminium-Hydroxyverbindungen unterscheidet und auch als Hydrogranate bezeichnet wird. Das Kristallgitter samt Gitterabständen im Kristall des Katoits ist beispielsweise ausführlich dargestellt in der Veröffentlichung C. Cohen-Addad et al in Acta Cryst.(1967), 23, Seiten 220 - 225, "Etude de la Substitution du Groupement SiO₄ par (OH)₄ dans les Composés Al₂Ca₃(OH)₁₂ et Al₂Ca₃(SiO₄)_{2,16}(OH)_{3,36} de Type Grenat". In der SiO₄-freien Variante wird demnach das Aluminium oktaedrisch von 6 Sauerstoff, die noch einen Wasserstoff tragen, umgeben. Das Calcium ist von 8 Sauerstoff umgeben, die einen gestörten Kubus bilden, der auch als dreiflächiger Dodekaeder bezeichnet wird. Ohne grundlegende Strukturänderung ist ein Austausch von OH-Elementen gegen äquivalente Mengen von SiO₄-Einheiten möglich.

Verbindungen dieser und damit der erfindungsgemäß definierten Art sind offensichtlich ebenfalls in der Lage, in wäßriger Suspension mit mineralischen quellfähigen Viskositätsbildnern der bisher eingesetzten Art in Interaktion zu treten und dabei grundsätzliche Eigenschaftsveränderungen in der Beschaffenheit der eingedickten, insbesondere wasserbasierten Flüssigphase auszulösen. Auffallend ist zunächst einmal, daß - beispielsweise bezogen auf Natriumbentonit als vorbekannten Viskositätsbildner - sehr viel geringere Mengen des Bentonits ausreichen, um zu einem substantiellen Aufbau der Fließgrenze (YP) des Flüssigsystems durch Zusatz kleiner Mengen der Regler mit Granatstruktur zu kommen. Die thixotrope Beschaffenheit der eingedickten Flüssigphase unterscheidet sich von den bisher einstellbaren Eigenschaftsbildern: Durch Mitverwendung der erfindungsgemäßen Regler gelingt es nicht nur unter Einsatz vergleichsweise geringer Mengen der viskositätsbildenden Bestandteile den Yield Point nach oben zu setzen, diese wirkungsvolle Vergelung des Systems kann beispielsweise ausgelöst werden ohne daß die Gelstärken in dem mit dem Stand der Technik vergleichbaren Maß nach oben getrieben werden. Es werden damit feststoffarme wäßrige Hilfsflüssigkeiten zugänglich, die beispielsweise auf dem Gebiet der Bohrspülsysteme eingesetzt werden können und eine Eigenschaftskombination zur Verfügung stellen, die in bisherigen wasserbasierten Bohrschlämmen nicht einstellbar war. Die im Ruhezustand als Feststoffmasse vorliegende Flüssigkeit verflüssigt sich rasch schon bei Einwirkung geringer Scherkräfte. Erbohrtes Gestein (Cuttings), auszutragende Zementreste aus der Zwischenstufe der Zementierung oder auch große Metallstücke, die durch Fräsen bei dem sogenannten Milling anfallen und aus den Bohrlöchern gegebenenfalls aus großer Tiefe ausgetragen werden müssen, werden problemlos von dem erfindungsgemäß ausgebildeten wäßrigen Gel transportiert. Andererseits können die Feststoffe schnell und wirksam aus dem Bohrschlamm über Tage abgetrennt werden. Der rasche und intensive Viskositätswechsel bei Einwirkung von Scherkraft führt zu einer Fließfähigkeit der im wesentlichen gelartig erstarrten Masse durch Rohre, Kanäle und dergleichen, die annähernd als wasserartiges Fließen angesehen werden kann. Kräfteeinwirkungen auf den mitgetragenen Gelanteil finden praktisch nicht statt, so daß das Strömungs- beziehungsweise Fließprofil angenähert dem idealisierten Plugflow angeglichen werden kann. Ohne Anspruch auf Vollständigkeit gilt weiterhin: Wäßrige Zubereitungen unter Mitverwendung der erfindungsgemäßen Regler mit der 3-dimensionalen Raumnetzstruktur zeigen bei geringen Gehalten an Viskositätsbildnern von der Art des Natriumbentonits oder entsprechender Tone hohe Pseudoplastizität mit niederen N-Werten. Zum Aufbau der eingedickten Flüssigphasen kann Frischwasser ebenso wie Salzwasser, insbesondere Meerwasser, eingesetzt werden. Die erfindungsgemäß ausgebildeten Gelstrukturen sind hochtemperaturstabil und gegenüber den üblichen Verunreinigungen beispielsweise aus dem Gebiet der geologischen Bohrtechnik im wesentlichen unempfindlich.

In breiter Formulierung sind als Regler im erfindungsgemäßen Sinne Mischhydroxidverbindungen mit Granatstruktur bevorzugt synthetischen Ursprungs der nachfolgenden allgemeinen Formel I definiert:

M^{II} ₐ M^{III} _{b} (OH)_{2a+3b-n^{·}m} Aⁿ ₘ (I)

In dieser allgemeinen Formel bedeuten:
- M^{II}:: Ca, Mg, Zn, Cu, Ba, Sr, Fe, Mn und/oder Co
- M^{III}:: Al, Fe, Cr und/oder Ga
- A:: 1- und/oder mehrwertige Säurereste mit der Wertigkeit n und dabei bevorzugt Halogenid, Sulfat, Nitrat, Carbonat, Silikat, Phosphat und/oder Borat
- a:: eine Zahl von etwa 2 bis 4, bevorzugt etwa 3,
- b:: eine Zahl von etwa 1 bis 3, bevorzugt etwa 2.
Weiterhin gilt dabei, daß das Verhältnis
- a:b: eine Zahl im Bereich von 1:1 bis 3:1 ist und bevorzugt etwa dem Verhältnis von 3:2 entspricht.
Schließlich ist das Produkt
- n^{·}m:: eine Zahl von 0 bis etwa 6. Bevorzugt sind entsprechende Zahlenwerte unter 4 und insbesondere entsprechende Zahlenwerte unterhalb 1.

Die wichtigsten Vertreter der hier in einer allgemeinen Formel dargestellten Mischhydroxidverbindungen vom Granat-Typ ordnen sich den zuvor in der zitierten Literatur dargestellten Klassen der Hydrogrossulare und Katoite zu. Die wichtigsten Vertreter der erfindungsgemäßen Regler sind Katoite der allgemeinen Formel I, in denen alle 12 negativen Positionen des Granat-Kristalls mit OH-Gruppen besetzt sind - mit anderen Worten: Verbindungen der allgemeinen Formel I, in denen kein zusätzlicher Säurereste A vorliegt und damit m den Zahlenwert von 0 hat (Ca₃Al₂(OH)₁₂). Von gleicher Wichtigkeit sind allerdings Verbindungen, in denen eine untergeordnete Menge der Hydroxylgruppen des gerade zuvor angegebenen Katoit-Typs durch solche Säurereste A ersetzt sind. Besondere Bedeutung kommt dabei dem SiO₄-Rest zu, der stöchiometrisch 4 Hydroxylgruppen entspricht und damit diese in der Kristallstruktur ersetzt (Ca₃Al₂(OH)₈SiO₄). Die erfindungsgemäß besonders bevorzugten Katoite enthalten allerdings sehr geringe Mengen an SiO₄-Resten, so daß - bezogen auf die Darstellung im Rahmen der allgemeinen Formel (I) - die numerische Zahl für m deutlich unter 1 - z.B. bis etwa 0,5 oder auch nur bis 0,3 - liegt. Zahlenwerte für m im Bereich von 0,005 bis 0,1 können im Fall der Katoit/Grossular-Mischkristalltypen besonders geeignete Vertreter für Regler im erfindungsgemäßen Sinne sein.

Allgemein gilt, daß die in der Regel synthetisch hergestellten Regler der erfindungsgemäßen Lehre der allgemeinen Formel I beträchtliche Mengen an Hydratwasser enthalten können. Die Herstellung dieser Regler vom Granat-Typ, auf die im nachfolgenden noch eingegangen wird, erfolgt im allgemeinen in wäßriger Lösung. Das entstehende Reaktionsprodukt der allgemeinen Formel I ist jedoch weitgehend wasserunlöslich. Es kann in wäßriger Aufschlämmung oder auch in Form trockener Pulver eingesetzt werden. Die individuelle Teilchengröße der Katoitkristalle liegt zweckmäßigerweise nicht über etwa 250 µm, wobei niedrigere TeilchengröBen insbesondere solche im Bereich von etwa 0,01 bis 100 µm bevorzugt sind. Besonders zweckmäßig kann der Einsatz von Pulvern sein, deren mittlere Teilchengröße etwa im Bereich von 0,1 bis 30 µm liegt. Produkte dieser Art können in einfacher Weise durch Synthese erhalten werden.

Die besonders bevorzugten Katoite der Grundstruktur Ca₃Al₂(OH)₁₂ beziehungsweise deren partiellen Austauschprodukte mit 1- und/oder mehrwertigen anorganischen Säureresten enthalten solche fremden Bauelemente bezüglich der Säurereste bevorzugt in Mengen von höchstens etwa 50 Mol-%, zweckmäßig nicht mehr als ca. 20 bis 30 Mol-%, insbesondere in Mengen von nicht mehr als etwa 10 Mol-% und bevorzugt in Mengen von nicht mehr als etwa 1 bis 3 Mol-%, beziehungsweise deutlich unter 1 Mol-% der OH-Elemente im Grundbaustein vom Granat-Typ.

Es ist aber auch möglich, in Katoiten der angegebenen Formel die 2-wertigen und/oder 3-wertigen Metallbausteine anteilsweise gegen andere Metallbausteine vergleichbarer Wertigkeit auszutauschen. Beispielsweise wird für das praktische Arbeiten damit zu rechnen sein, daß häufig ein gewisser Anteil der Calciumbausteine durch entsprechende Anteile an Erdalkalimetallen, besonders Magnesium, ersetzt sind. Anlaß hierfür ist, daß technische Qualitäten von Calciumoxiden beziehungsweise -hydroxiden gewisse Magnesiumanteile als Verunreinigung enthalten. Es ist von besonderem Vorteil für die erfindungsgemäße Lehre, daß hier kein besonderer Reinigungsaufwand getrieben werden muß, um zu hochwirksamen Reglern mit Katoitstruktur im Sinne der erfindungsgemäßen Lehre zu kommen.

Die Verbindungen der allgemeinen Formel I und insbesondere die entsprechenden Katoite können beispielsweise in Anlehnung an die Lehre der DE-C-24 24 763 aus den jeweiligen Hydroxiden der 2- und 3-wertigen Metalle hergestellt werden. Grundsätzlich ist die Herstellung von synthetischen Komponenten dieser Art Stand der Technik, verwiesen wird in diesem Zusammenhang beispielsweise auf die eingangs zitierten Literaturstellen E. Passaglia et al., a.a.O. und C. Cohnen-Added et al. a.a.O. Im einzelnen gilt beispielsweise das Folgende:

Die erfindungsgemäß zu verwendenden Verbindungen der Formel (I) und insbesondere die Katoite können in an sich bekannter Weise beispielsweise aus den Hydroxiden oder Oxiden des Calciums und des Aluminiums durch Fällung im wäßrigen System - gewünschtenfalls unter Zusatz von Silikationen, z.B. in Form von Wasserglas - hergestellt werden. Zweckmäßig ist dabei die Anwesenheit von Alkali, bevorzugt in Form wäßriger Lösungen von Natriumhydroxid. Im Sinne der Erfindung ist es besonders einfach, die Katoite der Formel (I) in einer Fällungsreaktion aus Natriumaluminatlaugen mit wäßrigen Suspensionen von Calciumhydroxid oder Calciumoxid - gewünschtenfalls unter Zusatz von Silikationen, insbesondere Wasserglas - herzustellen. Diese Herstellungsvariante ist besonders preisgünstig, da Natriumaluminatlaugen beispielsweise im Bayer-Prozeß bei der Aufbereitung von Bauxit anfallen. Die Einsatzmenge an Calcium und Aluminium kann im molaren Bereich liegen. Es können aber auch problemlos höhere Mengen der Ausgangsstoffe eingesetzt werden, da sich stets Katoite der allgemeinen Formel (I) ausbilden und die Überschüsse beispielsweise an Calcium- oder Aluminiumhydroxid unverändert vorliegen.

Die im Sinne der Erfindung bevorzugte Herstellung aus den Natriumaluminaten wird vorzugsweise derart durchgeführt, daß zu der Natriumaluminatlauge das Oxid oder Hydroxid des Calciums in Form einer wäßrigen Dispersion zugegeben wird. Es empfiehlt sich, das Reaktionsgemisch anschließend auf Temperaturen im Bereich von 50 bis 150°C zu erwärmen. In der Regel ist nach 0,1 bis 10 Stunden die Umsetzung beendet.

Das synergistische Zusammenwirken der erfindungsgemäß definierten Regler und der gemeinsam damit zum Einsatz kommenden mineralischen Verdickungsmittel auf Basis natürlicher und/oder synthetischer Tone beziehungsweise weiterer quellfähiger Schichtsilikatverbindungen ist gerade für diese nach dem Stand der Technik eingesetzten quellfähigen Viskositätsbildner in breitem Sinne gegeben. Neben den in der Praxis wichtigsten Verdickern vom Typ der Bentonite und Attapulgite seien als weitere Beispiele für solche Viskositätsbildner mineralischen Ursprungs die folgenden Stoffklassen genannt: Kaolinit, Halloysit, Smectite, Montmorillonite, Illite, Saponite, Vermiculit, Sepiolit, Fullererden und dergleichen.

In einer wichtigen Ausführungsform werden die bevorzugt als rieselfähige Pulver vorliegenden Regler der Erfindung, insbesondere solche vom Katoittyp, zusammen und dabei in Abmischung mit ausgewählten quellfähigen vorbekannten Viskositätsbildnern eingesetzt. Die Lehre der Erfindung sieht hier also vor "Regler-Gemische" einzusetzen, in denen die eine Komponente die Regler der zuvor geschilderten Art mit 3-dimensionaler Raumnetzstruktur vom Granat-Typ sind, die in Abmischung mit Viskositätsbildnern anorganischer und/oder organischer Art vorliegen. Diese als Mischungskomponenten im Regler-Gemisch mitverwendeten Viskositätsbildner können - im Falle der anorganischen Viskositätsbildner - gleich oder verschieden zu den quellfähigen Mineralstoffen sein, die als Hauptkomponenten zur Viskositätsausbildung eingesetzt und durch den erfindungsgemäßen Zusatz der Regler modifiziert werden. Die im Regler-Gemisch gewünschtenfalls mitverwendeten quellfähigen Komponenten werden nachfolgend auch als "Regler-Mischkomponenten" bezeichnet. Durch ihre Mitverwendung im Regler-Gemisch und ihre Auswahl nach Art und Menge ist eine Modifizierung der Reglerwirkung und damit letztlich eine Modifizierung des Eigenschaftsbildes der verdickten wäßrigen Phasen möglich.

Wenn sich auch grundsätzlich weitgehend beliebige Mischungsverhältnisse für die erfindungsgemäßen Regler und die in Abmischung mitverwendeten Regler-Mischkomponenten - insbesondere bei Einsatz solcher Mischkomponenten auf mineralischer Basis - eignen, so gelten doch für Stoffgemische dieser Art die nachfolgenden Angaben. In einer wichtigen Ausführungsform werden höchstens etwa gleiche Mengen der Regler-Mischkomponente(n) bezogen auf die vorgelegte Menge an erfindungsgemäßem Regler mit 3-dimensionaler Raumnetzstruktur eingesetzt. Es kann dabei zweckmäßig sein, die Menge der mineralischen Regler-Mischkomponente(n) auf maximal 20 oder 30 Gew.-% der einzusetzenden Regler-Feststoffmischung einzuschränken, wobei Mengenverhältnisse im Bereich von etwa 2 bis 20 Gew.-% und insbesondere etwa 5 bis 15 Gew.-% - auch hier bezogen auf Regler-Feststoffmischung - an quellfähigem synthetischem und/oder natürlichem Tonmineral als Regler-Mischkomponente(n) besonders geeignet sein können.

In einer wichtigen Ausführungsform werden als quellfähige synthetische Regler-Mischkomponenten die in der eingangs genannten EP-B-0 260 538 beschriebenen Schichtsilikate insbesondere aus der Klasse der Smectite mitverwendet, wobei hier entsprechenden synthetischen Hectoriten und/oder synthetischen Saponiten besondere Bedeutung zukommt. Verbindungen dieser Art sind gekennzeichnet durch die nachfolgende allgemeine Formel II

MgO · aMA · bAl₂O₃ · cSiO₂ · nH₂O (II)

wobei in dieser Formel bedeuten:
- M =: Na⁺ und/oder Li⁺ bei einem Na/Li-Verhältnis gleich oder größer 1
- A =: F⁻, OH⁻ und/oder 1/2 O²⁻ sowie
a,b,c und n Zahlen sind gemäß
a = 0,1 bis 0,6
b = 0 bis 0,3
c = 1,2 bis 1,7
n = 0 bis 3,0

Synthetische Hectorite dieser Art sind besonders wichtige Mischungskomponenten für die hier betroffene bevorzugte Ausführungsform der erfindungsgemäBen Lehre zu Regler-Gemischen. Zur Beschaffenheit dieser quellfähigen Schichtsilikatverbindungen wird im übrigen auf die zitierte Literaturstelle verwiesen, deren Inhalt bereits eingangs zum Gegenstand auch der vorliegenden Erfindungsoffenbarung gemacht worden ist.

Wichtige Regler-Mischkomponenten sind aber auch andere, insbesondere mineralische Komponenten mit Schichtstruktur von der Art des Hydrotalcits, wie er beispielsweise als kristallines basisches Aluminium-Magnesiumcarbonat beschrieben ist in der DE-C- 33 06 822. Besonders interessante Regler-Mischkomponenten sind in diesem Zusammenhang der synthetischen Schicht-Mineralien insbesondere die synthetischen mineralischen Mischoxide, wie sie in der eingangs zitierten EP-A-0 207 810 beschrieben sind. Es hat sich überraschenderweise gezeigt, daß durch gemeinsame Verwendung der erfindungsgemäßen Reglerkomponenten mit 3-dimensionaler Granatstruktur und der MMLHC-Verbindungen dieser zuletzt genannten Literaturstelle synergistische Wirkungssteigerungen bezüglich des Viskositätsaufbaus der wasserbasierten Phase erhalten werden können, die den Ergebnissen bei alleiniger Verwendung der MMLHC-Verbindungen in Kombination mit quellfähigen Tonen im Sinne der Lehre dieser EP-A-0 207 810 deutlich überlegen sind. Insbesondere gelingt es in dieser Kombination, die Fließgrenze (YP) auf die gewünschten hohen Werte anzuheben, gleichzeitig aber die Gelstärke bei den erwünschten niederen Werten zu halten. Zur chemischen Beschaffenheit und Herstellung der in dieser Ausführungsform der Erfindung mitverwendeten Regler-Mischkomponenten vom Typ der MMLHC wird auf die Lehre der EP-A-0 207 810 verwiesen, deren Offenbarung hiermit ebenfalls zum Gegenstand auch der vorliegenden Erfindungsoffenbarung gemacht wird. Grundsätzlich können beliebige Mischungsverhältnisse der erfindungsgemäßen Regler der allgemeinen Formel (I) und der als Regler-Mischungskomponenten eingesetzten MMLHC eingestellt werden, so daß Mischungverhältnisse von beispielsweise 95/5 bis 5/95 - jeweils Gewichtsteile der in Abmischung vorliegenden Komponenten - geeignet sind. Bevorzugt wird allerdings, daß der als Regler-Mischkomponente eingesetzte Anteil an MMLHC die Menge der erfindungsgemäßen Regler gemäß der allgemeinen Formel (I) nicht oder nicht wesentlich überschreitet. Es hat sich gezeigt, daß schon mit sehr geringen Mengen der MMLHC - beispielsweise 5 bis 20 Gew.-% (Gew.-% bezogen auf Summe von Regler und Regler-Mischkomponente) - deutliche synergistische Wirkungssteigerungen eingestellt werden können.

Die erfindungsgemäßen Regler beziehungsweise Regler-Gemische können in einer weiteren Ausführungsform zusammen mit basischen Oxiden und/oder Hydroxiden insbesondere mehrwertiger Metalle zum Einsatz kommen. Dies erweist sich insbesondere dann als vorteilhaft, wenn die mit den Regler-Gemischen versetzten Flüssigkeiten bei Temperaturen oberhalb 100 °C zum Einsatz kommen. Hierbei werden besonders günstige rheologische Eigenschaften erzielt. Bevorzugt sind dabei entsprechende Oxide beziehungsweise Hydroxide von Mg, Ca, Zn, Al und/oder Fe. Auch hier gilt, daß praktisch beliebige Mischungsverhältnisse der Regler und der Metalloxide beziehungsweise -hydroxide eingesetzt werden können, wobei aber der zuvor angegebene Sachverhalt auch hier bevorzugt ist, daß üblicherweise wenigstens etwa 50 Gew.-% der Stoffmischung durch die erfindungsgemäß beschriebenen Regler mit 3-dimensionaler Granatstruktur gebildet werden. Im übrigen gelten die zuvor im Zusammenhang mit den quellfähigen Regler-Mischkomponenten mineralischen Ursprungs angegebenen Zahlenverhältnisse hier sinngemäß. Die hier angesprochene Ausführungsform der Erfindung hat aus dem nachfolgenden Grund besondere Bedeutung:

Bei der Herstellung der Katoit-Verbindungen bildet sich die sterische Granatstruktur auch in Gegenwart eines Überschusses einzelner Metalloxidkomponenten im Reaktionsgemisch. Erfindungsgemäß kann in dieser Weise von vornherein die Einstellung bestimmter Mischungsverhältnisse der erfindungsgemäß beschriebenen Regler und mitverwendeter Metalloxide beziehungsweise -hydroxide gesteuert werden. Für eine Reihe von Einsatzzwecken - zum Beispiel im Zusammenhang mit Alkalireserven enthaltenden Bohrspülungen für den Aufschluß geologischer Vorkommen oder für den Einsatz der Spülungen bei Temperaturen oberhalb 100 °C - bietet sich hier eine einfache Ausführungsform zur Herstellung wirksamer und in vielgestaltiger Weise brauchbarer Mischungskomponenten für die Praxis an.

Die bei der erfindungsgemäß gesteuerten Eindickung wäßriger Systeme verwendeten Mengenverhältnisse von erfindungsgemäß definiertem Regler beziehungsweise Regler-Gemisch zu den vorbekannten Viskositätsbildnern auf Mineralstoffbasis können in breitem Bereich variiert werden. Geeignet sind beispielsweise Mischungsverhältnisse von 0,02/1 bis 2/1 - bezogen auf Regler/mineralische Viskositätsbildner. Bevorzugt sind dabei Mischungsverhältnisse von etwa 0,1/1 bis 1/1, d.h. der Regler wird bevorzugt in untergeordneten bis äußerstenfalls etwa gleiche Mengen bezogen auf den quellfähigen mineralischen Viskositätsbildner verwendet.

Wie bereits angegeben können zusammen mit den Reglern und den quellfähigen Viskositätsbildnern auf anorganischer Basis organische Polymerverbindungen mitverwendet werden, um Variationen und/oder Optimierungen im Eigenschaftsbild der letztlich anfallenden wasserbasierten Hilfsstoffe einzustellen. Die organischen Polymer-verbindungen können dabei als Regler-Mischungskomponenten - d.h. in unmittelbarer Abmischung mit den Katoiten - vorliegen oder getrennt hiervon den zu verdickenden wasserbasierten Hilfsmitteln zugesetzt werden. Alle in der hier betroffenen Technologie gebräuchlichen Polymer-Verbindungen können zusammen mit den erfindungsgemäß beschriebenen Reglern der allgemeinen Formel (I) verwendet werden. Genannt seien beispielsweise Stärke, Carboxymethylstärke, Carboxymethylcellulose, Carboxymethylhydroxyethylcellulose, Hydroxyethylcellulose, Lignin-Derivate, Lignite und/oder Chromlignite, Alginate, propoxylierte Alginate, Xanthan u.a. bakterielle Polysaccharide und allgemeine synthetische Polymere. Für eine wichtigste erfindungsgemäße Ausführungsform - nämlich für den Einsatz der Spül- und Behandlungsmittel unter hohen Temperaturen von beispielsweise 150°C und darüber -werden jedoch bevorzugt solche Polymer-Verbindungen verwendet, die speziell für die Hochtemperatur-Anwendung auf dem hier betroffenen Gebiet entwickelt worden sind.

Geeignete Hochtemperatur-beständige Polymere für die hier betroffenen Anwendungsgebiete sind beispielsweise synthetische Polyvinylsulfonsäuren, insbesondere entsprechende Homopolymerisate oder auch ausgewählte sulfonierte Styrolpolymerisate, insbesondere entsprechende Copolymerisate aus Vinylsulfon- bzw. Styrolsulfonsäure mit Vinylacylamiden und gewünschtenfalls Acryl- und/oder Methacrylamid. Zum einschlägigen druckschriftlichen Stand der Technik wird beispielsweise verwiesen auf die DE-A-31 44 770 oder die offengelegte EP-A-0 122 073. Aber auch Polymer-Verbindungen, wie sie beispielsweise in der DE-A-34 04 491 beschrieben sind, fallen in die erfindungsgemäß bevorzugte Ausführungsform der gemeinsamen Verwendung von Reglern der allgemeinen Formel (I) mit temperaturstabilen Polymer-Komponenten. Kombinationen dieser Art können in Bohrspül- und/oder entsprechenden Behandlungsmitteln verwendet werden, die zum Einsatz bei Temperaturen oberhalb 175°C und insbesondere bei Temperaturen von wenigstens 200°C kommen.

Die organischen Polymerverbindungen werden in Mengen eingesetzt, wie sie auf dem erfindungsgemäß besonders wichtigen Gebiet der Bohrspülungen und/oder sonstigen fließfähigen Bohrlochbehandlungsmittel üblich sind. Auch hier wird auf den zitierten einschlägigen Stand der Technik verwiesen, beispielsweise auf die Angaben der EP-B-0 260 538.

Die erfindungsgemäBe Lehre hat in einer wichtigen Ausführungsform besondere Bedeutung im Zusammenhang mit dem Aufbau von wasserbasierten Bohrlochbehandlungsmitteln, insbesondere Bohrspülungen, die zusammen mit der eingedickten wäBrigen Phase eine disperse organische, bei Arbeitstemperaturen insbesondere fließfähige Ölphase fein-emulgiert enthält. Bohrspülungen dieses Typs sind bekanntlich O/W-Emulsionen, die in ihren Gebrauchseigenschaften eine Zwischenstellung zwischen rein wäßrigen Systemen und Öl-basierten Invert-Spülungen einnehmen. Ausführliche Sachinformationen finden sich beispielsweise in dem Fachbuch George R. Gray/O.C.H. Darley, "Composition in Propertys of Oil Well Drilling Fluids" 4. Auflage 1980/81, Gulf Publishing Company, Houston und die umfangreiche darin zitierte Sach- und Patentliteratur. O/W-Bohrspülungen dieser Art sind üblicherweise 3-Phasensysteme aus Öl, Wasser und feinteiligen Feststoffen.

Im Rahmen der Erfindung kann solchen O/W-Emulsionen besondere Bedeutung zukommen. Hierbei werden in bevorzugten Ausführungsformen umweltverträgliche disperse Ölphasen eingesetzt, die insbesondere basieren auf wenigstens weitgehend wasserunlöslichen Alkoholen, entsprechend wasserunlöslichen Ethern und Estern von Mono- und/oder Polycarbonsäuren, sowie vergleichbaren Kohlensäureestern. Verwiesen wird in diesem Zusammenhang auf die einschlägigen Veröffentlichungen und Anmeldungen der Anmelderin gemäß DE-A-39 15 875, DE-A-39 15 876, DE-A-39 16 550, DE-A-40 18 228 und DE-A-40 19 266. Zu der hier betroffenen Ausführungsform der vorliegenden Erfindung -0/W-Emulsionen mit Viskositätsregulierung der wäßrigen Phase durch Mitverwendung der erfindungsgemäßen Regler mit 3-dimensionaler Granatstruktur, insbesondere Katoit - wird im übrigen auf die Offenbarung dieser einschlägigen Druckschriften verwiesen, deren Offenbarung hiermit ebenfalls ausdrücklich auch zum Gegenstand der vorliegenden Erfindungsoffenbarung gemacht wird.

Im Zusammenhang mit wasserbasierten Bohrlochbehandlungsmitteln, insbesondere Bohrspülungen, kann dem Zusatz von Hilfsstoffen zur Inhibierung erbohrten Gesteins erhöhter Wasserempfindlichkeit besondere Bedeutung zukommen. Neuere Entwicklungen sehen hier unter anderem den Einsatz wasserlöslicher Polyalkohole, wie Polyglykole, den Einsatz von Glycerin, vernetzten und/oder unvernetzten Oligo- und/oder Polyglycerinen und vergleichbaren Verbindungen vor. Verwiesen wird beispielsweise auf die folgenden Druckschriften EP-A-0 293 191 (Glycerin und/oder Polyglycerine), US-A-4,830,765 (Polyfunktionelle Alkohole, Glykol, Glykolether, Polypropylenglykole, Polyethylenglykole, Ethylenoxid-Propylenoxidcopolymere, Alkohol-initiierte E0-P0-Copolymere und deren Gemische), M.E. Chenevert "Glycerol additive provides shale stability" in Oil & Gas Journal, July, 1989, 60 - 64 sowie D. Green et al. "Glycerol-based mud system resolves hole sloughing problems" in WORLD OIL, September 1989, 50/51. Auch im Zusammenhang mit derart modifizierten wäßrigen Bohrlochbehandlungsmitteln ist die Regulierung und Einstellung der Viskosität im Rahmen der Maßnahmen des erfindungsgemäßen Handelns von Bedeutung.

In der hier betroffenen Ausführungsform der Erfindung können die viskositätsgesteuerten wasserbasierten Bohrhilfsmittel alle für vergleichbare Spülungstypen vorgesehenen Additive enthalten. Diese Additive können wasserlöslich, öllöslich und/oder wasser- beziehungsweise öl-dispergierbar sein. Bekannte Additive wasserbasierter O/W-Emulsionsspülungen sind beispielsweise Emulgatoren, fluidloss-Additive, Alkalireserven, Mittel zur Inhibierung des unerwünschten Wasseraustausches zwischen erbohrten Formationen und der wasserbasierten Spülflüssigkeit, Netzmittel zum besseren Aufziehen der emulgierten Ölphase auf Feststoffoberflächen zum Beispiel zur Verbesserung der Schmierwirkung, Desinfektionsmittel und dergleichen. Auch hier wird auf den einschlägigen Stand der Technik verwiesen wie er beispielsweise in der zitierten Fachliteratur Gray/-Darley a.a.0., ausführlich beschrieben wird. Aber auch die zuvor genannten Schutzrechtsanmeldungen der Anmelderin zu O/W-basierten Emulsionsbohrspülungen geben weiterführende ausführliche Hinweise.

### Beispiele

### Beispiel 1

Unter Verwendung von handelsüblichem feinteiligem Natriumbentonit wird unter Einsatz von Leitungswasser eine 4,5 Gew.-% Bentonit enthaltende wäßrige Suspension durch intensives Einrühren des pulverförmigen Minerals in die Wasserphase hergestellt. Mit 30%iger Natronlauge wird der pH-Wert von 11 eingestellt. Die so zubereitete Bentonitsuspension wird über Nacht bei Raumtemperatur stehengelassen.

Als Blindwerte werden die nachfolgenden Kenngrößen dieser wäßrigen Suspension bestimmt:
Plastische Viskosität (PV) in cP
Fließgrenze (YP) in lb/100ft²
Gelstärke - 10 sec und 10 min - in lb/100ft²

Getrennte Proben dieser wäßrigen Bentonitsuspension werden mit dem im nachfolgenden beschriebenen Regler-Gemisch im Sinne der erfindungsgemäßen Lehre versetzt, dabei werden in den einzelnen jeweils voneinander getrennten Proben steigende Mengen des Regler-Gemisches zum Einsatz gebracht. Der als pulverförmiges Stoffgemisch eingesetzte Regler beziehungsweise das entsprechende Regler-Gemisch wird mit einem Intensivmixer für den Zeitraum von 20 Minuten in die wäßrige Bentonitsuspension eingerührt, dann werden zunächst unmittelbar nach Einmischen und weiterhin nach 16 Stunden Alterung bei Raumtemperatur die zuvor angegebenen rheologischen Kenngrößen bestimmt. Die dabei erhaltenen Werte sind in der nachfolgenden Tabelle 1 zusammengefaßt. Die nach Alterung von 16 Stunden bei Raumtemperatur bestimmten jeweiligen Werte sind dabei in Klammern hinter die am Frischmaterial bestimmten Werte gesetzt.

Das erfindungsgemäß verwendete Regler-Gemisch kommt als Trockenpulver zum Einsatz. Es besteht aus dem nachfolgend definierten Stoffgemisch:
90 Gew.-% eines sehr schwach Silikat-modifizierten Katoits - SiO₄-Gehalt bezogen auf die Silikat-freie Katoiteinheit Ca₃Al₂(OH)₁₂ weniger als 0,1 SiO₄-Einheiten
10 Gew.-% eines hochquellfähigen synthetischen Hectorits gemäß EP-B-0260538

**Tabelle 1**

| Ansatz | PV | YP | Gelstärke | |
|---|---|---|---|---|
| | | | 10 sec | 10 min |
| 4,5 Gew.-% Bentonitsuspension pH 11 in Leitungswasser | 5 (5) | 5 (6) | 4 (3) | 16 (17) |
| | | | | |
| + 0,5 Gew.-% Regler-Gemisch | 2 (3) | 51 (47) | 23 (25) | 26 (30) |
| | | | | |
| + 0,75 Gew.-% Regler-Gemisch | 3 (4) | 52 (52) | 17 (26) | 20 (27) |
| | | | | |
| + 1,0 Gew.-% Regler-Gemisch | 2 (4) | 52 (56) | 17 (26) | 26 (31) |
| | | | | |
| + 3,0 Gew.-% Regler-Gemisch | 5 (6) | 62 (68) | 20 (55) | 26 (58) |
| | | | | |
| + 5 Gew.-% Regler-Gemisch | 6 (9) | 86 (91) | 25 (28) | 20 (36) |

### Beispiel 2

In der gemäß Beispiel 1 angegebenen Art wird zunächst eine 8 Gew.-%ige Bentonitsuspension in Leitungswasser hergestellt, die nachfolgend mit Nordseewasser im Verhältnis 1:1 verdünnt wird. Bestimmt werden wieder die in Beispiel 1 benannten Kenngrößen PV, YP und Gelstärke (10 sec und 10 min), wobei hier in der nachfolgenden Tabelle 2 die jeweils am frisch hergestellten Material bestimmten Kenngrößen zusammengefaßt sind. Das hier und in den nachfolgenden Beispielen eingesetzte Regler-Gemisch im Sinne der erfindungsgemäßen Lehre entspricht dem in Beispiel 1 beschriebenen Material. Die jeweiligen Versuchsreihen betreffen hier und in den folgenden Beispielen - wie in Beispiel 1 - jeweils voneinander getrennte Ansätze.

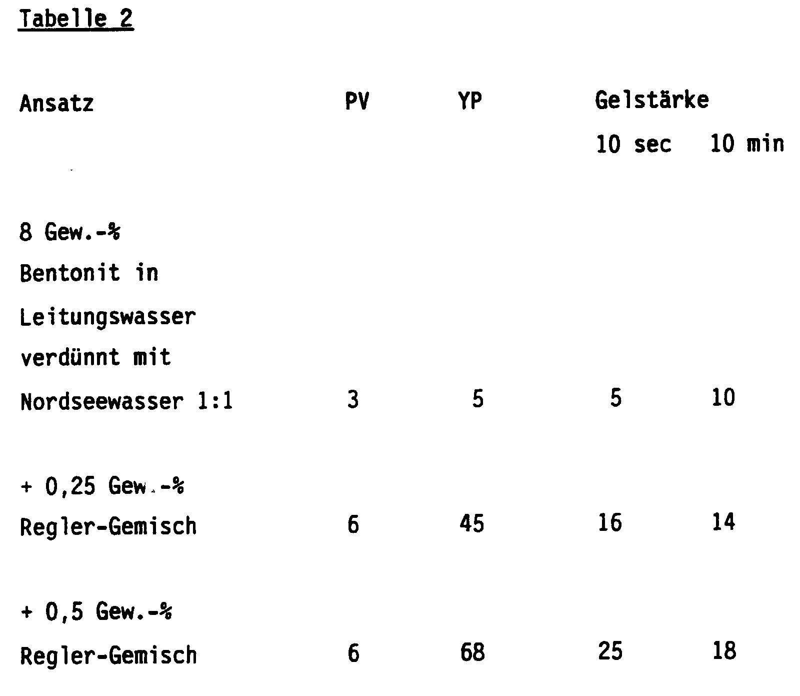

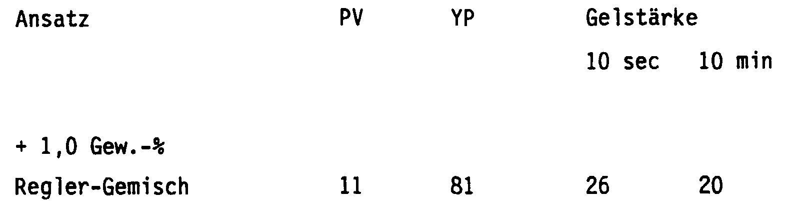

### Beispiel 3

Es wird eine 4,5 Gew.-%ige Bentonitsuspension in Leitungswasser gemäß den Angaben des Beispiels 1 hergestellt und nachfolgend mit synthetischem Seewasser im Verhältnis 1:1 vermischt. In der nachfolgenden Tabelle 3 sind die an dieser Bentonitsuspension mit geringem Bentonitgehalt gemessenen Rheologiewerte gegenübergestellt den vergleichbaren Werten unter Zusatz steigender Mengen des erfindungsgemäßen Regler-Gemisches.

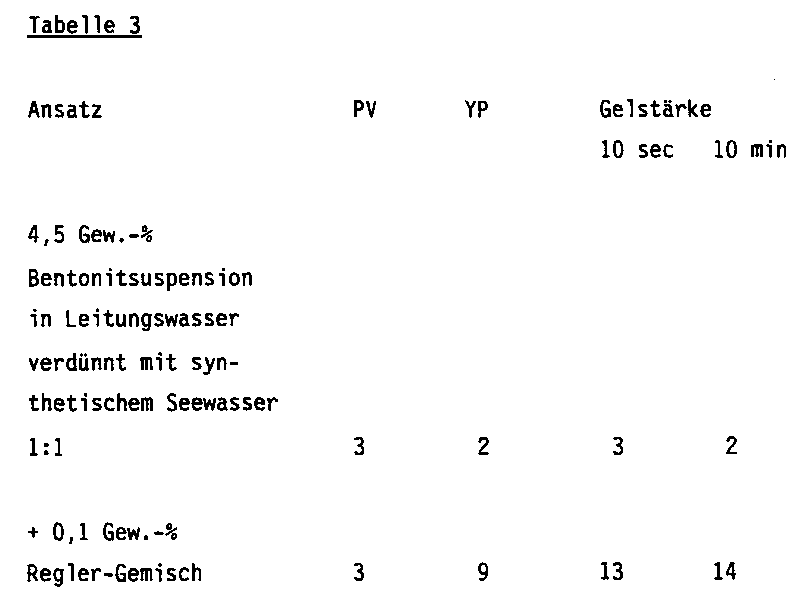

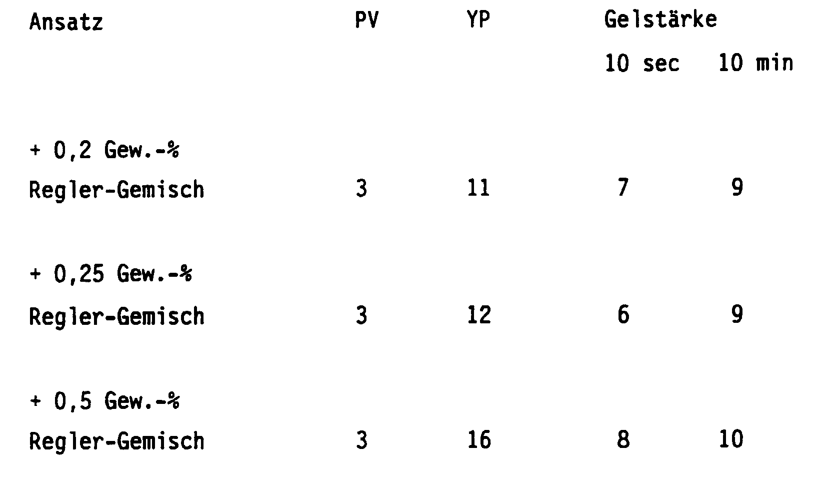

### Beispiel 4

Eine 4,5 Gew.-%ige Bentonitsuspension in Leitungswasser wird mit 30%iger Natronlauge auf pH 11 gestellt. Ein erster Teilbetrag dieser Suspension wird mit dem Regler-Gemisch des Beispiels 1 in einer Menge von 0,5 Gew.-% versetzt.

Ein zweiter Anteil dieser wäßrigen Bentonitsuspension wird mit 0,5 Gew.-% eines Regler-Gemisches der nachfolgenden Zusammensetzung versetzt (Gew.-%-Angaben hier bezogen auf das insgesamt eingesetzte Regler-Gemisch):

| | |
|---|---|
| 90 Gew.-% | des Regler-Gemisches gemäß Beispiel 1 |
| 10 Gew.-% | eines synthetischen mineralischen Mischoxids vom MMLHC-Typ gemäß EP-A-0 207 810 |

Ein dritter Teilbetrag der wäßrigen Bentonitsuspension wird mit 0,5 Gew.-% des mineralischen Mischoxids vom MMLHC-Typ ohne Mitverwendung der erfindungsgemäßen Regler beziehungsweise Regler-Gemische auf Basis der 3-dimensionalen Katoitverbindung versetzt.

In allen Fällen erfolgt die Einarbeitung der pulverförmigen Regler beziehungsweise Regler-Gemische in die wäßrige Natriumbentonitsuspension durch intensives Einrühren mit einem Multimixer für den Zeitraum von 20 Minuten.

Die bestimmten rheologischen Daten sind in der nachfolgenden Tabelle 4 zusammengefaßt.

**Tabelle 4**

| Ansatz | PV | YP | Gelstärke | |
|---|---|---|---|---|
| | | | 10 sec | 10 min |
| 4,5%ige Bentonitsuspension + 0,5 Gew.-% erfindungsgemäßes Regler-Gemisch gem. Beispiel 1 | 5 | 46 | 30 | 35 |
| | | | | |
| 4,5%ige Bentonitsuspension + 0,5 Gew.-% Regler-Gemisch gem. Beispiel 1 (90) MMLHC (10) | 8 | 60 | 22 | 20 |
| 4,5%ige Bentonitsuspension + 0,5 Gew.-% MMLHC | 3 | 67 | 60 | 45 |

Die Tabelle 4 zeigt das Folgende: Die Fließgrenze (YP) ist in allen 3 Vergleichsversuchen deutlich angehoben. Die angestrebten niedrigen Gelstärken sind aber nur unter Einsatz der erfindungsgemäß ausgestalteten Regler beziehungsweise Regler-Gemische eingestellt.

### Beispiel 5

Für dieses Beispiel wurde als Regler - ohne Zusatz einer Regler-Mischkomponente - eine erfindungsgemäße Mischhydroxidverbindung mit Granatstruktur eingesetzt, bei der im Gegensatz zum Katoit sämtliche Aluminiumbausteine durch entsprechende Anteile an Eisen ersetzt waren. Auch dieser Regler vom Granat-Typ war sehr schwach Silikat-modifiziert, d. h. der SiO₄-Gehalt, bezogen auf die Silikat-freie Struktureinheit Ca₃Fe₂(OH)₁₂, betrug weniger als 0,1 SiO₄-Einheiten. Die Herstellung dieses Eisen-haltigen Reglers erfolgte - wie vorstehend beschrieben - analog der Katoit-Herstellung aus den Metall(II) und (III)-Hydroxiden in alkalischem Medium.

Entsprechend den Angaben in Beispiel 1 wurde der Eisen-haltige Regler in eine 4,5 Gew.-%ige Bentonit-Suspension eingerührt, und die Suspension alkalisch gestellt. Die unter Zusatz steigender Mengen des erfindungsgemäBen Reglers erhaltenen rheologischen Kenngrößen - jeweils am frisch hergestellten Material sowie jeweils nach Alterung von 16 Stunden (Werte in Klammern) - sind in der nachstehenden Tabelle 5 angegeben.

**Tabelle 5**

| Ansatz Regler | PV | YP | Gelstärke | |
|---|---|---|---|---|
| | | | 10 sec | 10 min |
| 0,2 Gew.-% | 6 (7) | 11 (11) | 19 (19) | 24 (25) |
| 0,3 Gew.-% | 4 (7) | 36 (38) | 48 (59) | 52 (40) |
| 0,4 Gew.-% | 5 (4) | 64 (65) | 62 (66) | 28 (30) |
| 0,5 Gew.-% | 10 (10) | 82 (77) | 77 (73) | 34 (33) |
| 0,7 Gew.-% | 6 (6) | 36 (35) | 49 (36) | 15 (18) |
| 1,0 Gew.-% | 4 (6) | 26 (22) | 32 (28) | 13 (11) |

Die Fließgrenze (YP) durchläuft ein Maximum, das bei einer Regler-konzentration von 0,5 Gew.-% liegt. Ähnlich ist auch das Verhalten der Gelstärken in diesem Beispiel zu beurteilen.

### Beispiel 6

Für dieses Beispiel wurde als Regler - ohne Zusatz einer Regler-Mischkomponente - eine erfindungsgemäße Mischhydroxidverbindung mit Granatstruktur eingesetzt, bei der im Gegensatz zum Katoit sämtliche Calciumbausteine durch entsprechende Anteile an Zink ersetzt waren. Auch dieser Regler vom Granat-Typ war sehr schwach Silikat-modifiziert, d. h. der SiO₄-Gehalt, bezogen auf die Silikat-freie Struktureinheit Zn₃Al₂(OH)₁₂, betrug weniger als 0,1 SiO₄-Einheiten. Zur Herstellung dieses Zink-haltigen Reglers vergleiche die Angaben in Beispiel 5.

Die Durchführung der Versuche erfolgte im übrigen analog Beispiel 1. Die nachstehende Tabelle 6 enthält die ermittelten rheologischen KenngröBen, sowohl für das frisch hergestellte Material, als auch nach Alterung von 16 Stunden (Werte in Klammern).

**Tabelle 6**

| Ansatz Regler | PV | YP | Gelstärke | |
|---|---|---|---|---|
| | | | 10 sec | 10 min |
| 0,3 Gew.-% | 5 (6) | 10 (14) | 19 (26) | 28 (25) |
| 0,5 Gew.-% | 5 (4) | 22 (25) | 23 (19) | 24 (25) |

### Beispiel 7

Für dieses Beispiel wurden als Regler - ohne Zusatz einer Regler-Mischkomponente - Katoite mit unterschiedlichem Silikat-Gehalt eingesetzt. Der SiO₄-Ghalt, bezogen auf die Silikat-freie Katoiteinheit Ca₃Al₂(OH)₁₂, lag hierbei zwischen 0,02 und 0,25 SiO₄-Einheiten.

Bei allen Versuchen wurde eine konstante Regler-Konzentration von 0,5 Gew.-% eingehalten. Im übrigen erfolgte die Durchführung der Versuche analog den Angaben in Beispiel 1. Die nachstehende Tabelle 7 enthält die ermittelten rheologischen Kenngrößen, sowohl für das frisch hergestellte Material als auch nach Alterung von 16 Stunden (Werte in Klammern).

**Tabelle 7**

| Ansatz Silikat-Gehalt | PV | YP | Gelstärke | |
|---|---|---|---|---|
| | | | 10 sec | 10 min |
| 0,02 Gew.-% | 4 (2) | 46 (45) | 49 (48) | 30 (21) |
| 0,03 Gew.-% | 5 (3) | 44 (40) | 47 (52) | 26 (21) |
| 0,04 Gew.-% | 4 (2) | 45 (50) | 49 (47) | 27 (28) |
| 0,05 Gew.-% | 2 (2) | 43 (49) | 50 (48) | 31 (24) |
| 0,06 Gew.-% | 3 (2) | 35 (45) | 49 (49) | 20 (24) |
| 0,12 Gew.-% | 5 (3) | 22 (34) | 44 (48) | 46 (23) |
| 0,25 Gew.-% | 5 (6) | 20 (27) | 23 (33) | 23 (28) |

An Hand der Ergebnisse läßt sich der günstigste Silikat-Gehalt im Katoit mit 0,04 - 0,05 mol SiO₄ pro mol Katoit entsprechend der Formel I angeben.

## Patentansprüche

1. Verwendung von Mischhydroxidverbindungen 2-wertiger und 3-wertiger Metalle mit dreidimensionaler Raumnetzstruktur vom Granat-Typ der nachfolgenden allgemeinen Formel (I)
M^{II} ₐ M^{III} _{b} (OH)_{2a+3b-n^{·}m} Aⁿ ₘ (I)
in der bedeuten:
M^{II}: Ca, Mg, Zn, Cu, Ba, Sr, Fe, Mn und/oder Co
M^{III}: Al, Fe, Cr und/oder Ga
A: 1- und/oder mehrwertige Säurereste mit der Wertigkeit n, bevorzugt Halogenid, Sulfat, Nitrat, Carbonat, Silikat, Phosphat oder Borat
a: eine Zahl von 2 bis 4, bevorzugt etwa 3,
b: eine Zahl von 1 bis 3, bevorzugt etwa 2,
wobei weiterhin gilt
a:b ist eine Zahl im Bereich von 1:1 bis 3:1, bevorzugt etwa 3 :2 sowie
n^{·}m ist eine Zahl von 0 bis 6, bevorzugt eine Zahl kleiner 4 und insbesondere eine Zahl kleiner 1
als Regler der thixotropen Eindickung wäßriger Zubereitungen mittels quellfähiger Tone und/oder anderer quellfähiger Schichtsilikatverbindungen natürlichen und/oder synthetischen Ursprungs.

2. Verwendung nach Anspruch 1, dadurch gekennzeichnet, daß als Mischhydroxidverbindungen Katoite der Grundstruktur Ca₃Al₂(OH)₁₂ eingesetzt werden, deren OH-Elemente zu untergeordnetem Anteil auch gegen bevorzugt anorganische Säurereste ausgetauscht sein können und dabei insbesondere durch äquivalente Mengen an Silikatresten ersetzt sind und wobei weiterhin auch untergeordnete Anteile des Calciums und/oder des Aluminiums gegen andere 2-wertige beziehungsweise 3-wertige Metalle ausgetauscht sein können.

3. Verwendung nach Ansprüchen 1 oder 2, dadurch gekennzeichnet, daß Katoite der angegebenen Formel eingesetzt werden, deren Calcium-Gehalt anteilsweise gegen Magnesium ausgetauscht ist, wobei der Magnesiumanteil bevorzugt dem Magnesiumgehalt der zur Katoit-Synthese eingesetzten Calciumverbindung etwa entspricht.

4. Vewendung nach Ansprüchen 1 bis 3, dadurch gekennzeichnet, daß Katoite des Bereichs von Ca₃Al₂(OH)₁₂ bis Ca₃Al₂(OH)₈(SiO₄) eingesetzt werden, wobei (SiO₄)-arme Katoite bevorzugt sind, deren äquivalenter SiO₄-Gehalt im Mittel nicht mehr als etwa einer OH-Gruppe, insbesondere nicht mehr als etwa 0,5 OH-Gruppen - bezogen auf die kristalline Grundeinheit Ca₃Al₂(OH)₁₂ - entspricht.

5. Verwendung nach Ansprüchen 1 bis 4 dadurch gekennzeichnet, daß Mischhydroxidverbindungen mit Partikelgrößen nicht oberhalb etwa 250 µm, bevorzugt im Bereich von etwa 0,01 bis 100 µm und insbesondere im Bereich von etwa 0,1 bis 30 µm eingesetzt werden.

6. Verwendung nach Ansprüchen 1 bis 5, dadurch gekennzeichnet, daß die Regler in Form insbesondere wäßriger Aufschlämmungen und/oder als Feststoffpulver zum Einsatz gebracht werden.

7. Verwendung nach Ansprüchen 1 bis 6, dadurch gekennzeichnet, daß die Regler zusammen mit natürlichen und/oder synthetischen quellfähigen Tonen und/oder Schichtsilikatverbindungen eingesetzt werden.

8. Verwendung nach Ansprüchen 1 bis 7, dadurch gekennzeichnet, daß die Regler zusammen mit insbesondere wasserlöslichen und/oder wasserquellbaren Polymerverbindungen natürlichen und/oder synthetischen Ursprungs verwendet werden, wobei der Einsatz temperaturstabiler Polymerverbindungen besonders bevorzugt sein kann.

9. Verwendung nach Ansprüchen 1 bis 8, dadurch gekennzeichnet, daß die Regler zusammen mit basischen Oxiden und/oder Hydroxiden insbesondere mehrwertiger Metalle, bevorzugt mit entsprechenden Komponenten des Mg, Ca, Zn, Al und/oder Fe eingesetzt werden.

10. Verwendung nach Ansprüchen 1 bis 9, dadurch gekennzeichnet, daß zur Eindickung der wäßrigen Zubereitungen synthetischer und/oder natürlicher anorganischer Viskositätsbildner, insbesondere quellfähiger Tone die Regler mit dreidimensionaler Raumnetzstruktur in Mengenverhältnissen Regler/Ton im Bereich von 0,02/1 bis 2/1, vorzugsweise im Bereich von 0,1/1 bis 1/1, eingesetzt werden.

11. Verwendung nach Ansprüchen 1 bis 10, dadurch gekennzeichnet, daß die Regler zur Eindickung wäßriger Zubereitungen von Bentonit und/oder Attapulgit - insbesondere jeweils natürlichen Ursprungs - und/oder Hectorit - hier insbesondere synthetischen Ursprungs - eingesetzt werden.

12. Verwendung nach Ansprüchen 1 bis 11, dadurch gekennzeichnet, daß Kombinationen von Katoiten und anorganischen Viskositätsbildnern, bevorzugt synthetischen und hochquellfähigen Hectoriten, zur Viskositätsregulierung von Tonsuspensionen - insbesondere von wäßrigen Bentonitaufschlämmungen - eingesetzt werden.

13. Verwendung nach Ansprüchen 1 bis 12, dadurch gekennzeichnet, daß die Regler zur Rheologiesteuerung wasserbasierter Arbeitsmittel aus dem Bereich der Erdbauarbeiten und dabei insbesondere zur Rheologiesteuerung wäßriger Spülsysteme aus dem Bereich geologischer Bohrungen eingesetzt werden.

14. Additiv zur Einstellung und/oder Regelung der Rheologie und Gelstärke wäßriger Flüssigphasen, die unter Mitverwendung synthetischer und/oder natürlicher Mineralverbindungen, insbesondere quellfähiger Tone und/oder anderer Schichtsilikatverbindungen bevorzugt thixotrop eingedickt sind, dadurch gekennzeichnet, daß es als Regler feinstteilige Mischhydroxidverbindungen 2-wertiger und 3-wertiger Metalle mit dreidimensionaler Raumnetzstruktur vom Granat-Typ der nachfolgenden Formel (I)
M^{II} ₐ M^{III} _{b} (OH)_{2a+3b-n^{·}m} Aⁿ ₘ (I)
in der bedeuten:
M^{II}: Ca, Mg, Zn, Cu, Ba, Sr, Fe, Mn und/oder Co
M^{III}: Al, Fe, Cr und/oder Ga
A: 1- und/oder mehrwertige Säurereste mit der Wertigkeit n, bevorzugt Halogenid, Sulfat, Nitrat, Carbonat, Silikat, Phosphat oder Borat
a: eine Zahl von 2 bis 4, bevorzugt etwa 3,
b: eine Zahl von 1 bis 3, bevorzugt etwa 2,
wobei weiterhin gilt
a:b ist eine Zahl im Bereich von 1:1 bis 3:1, bevorzugt etwa 3:2 sowie
n^{·}m ist eine Zahl von 0 bis 6, bevorzugt eine Zahl kleiner 4 und insbesondere eine Zahl kleiner 1
sowie weitere anorganische und/oder organische Hilfsstoffe zur Einstellung und/oder Regulierung des Fließverhaltens beziehungsweise der Vergelung wäßriger Phasen enthält.

15. Additiv nach Anspruch 14, dadurch gekennzeichnet, daß zusammen mit den Reglern auf Katoit-Basis quellfähige natürliche und/oder synthetische Mineralverbindungen, wie Bentonit oder Attapulgit, insbesondere aber hochquellfähige Schichtsilikate vom Hectorit- und/oder Saponit-Typ, vorliegen.

16. Additiv nach Ansprüchen 14 bis 15, dadurch gekennzeichnet, daß Reglersysteme aus Katoit und weniger als 50 Gew.-%, vorzugsweise nicht mehr als 30 Gew.-% und insbesondere etwa 5 bis 20 Gew.-%, quellfähigem synthetischem Hectorit vorliegen.

17. Wasserbasierte und mit Viskositätsbildnern auf Basis quellfähiger Tonmineralien beziehungsweise Schichtsilikate natürlichen und/oder synthetischen Ursprungs eingedickte sowie gewünschtenfalls weitere gelöste, emulgierte und/oder suspendierte Hilfsstoffe enthaltende fließ- und pumpfähige Arbeitsmittel, insbesondere Hilfsflüssigkeiten für den Einsatz im Rahmen von Erdreich-Ausschachtungen und/oder Erdreichbohrungen, dadurch gekennzeichnet, daß sie zusammen mit den quellfähigen Viskositätsbildnern Mischhydroxidverbindungen 2-wertiger und 3-wertiger Metalle mit 3-dimensionaler Raumnetzstruktur vom Granat-Typ der nachfolgenden Formel (I) enthalten,
M^{II} ₐ M^{III} _{b} (OH)_{2a+3b-n^{·}m} Aⁿ ₘ (I)
in der bedeuten:
M^{II}: Ca, Mg, Zn, Cu, Ba, Sr, Fe, Mn und/oder Co
M^{III}: Al, Fe, Cr und/oder Ga
A: 1- und/oder mehrwertige Säurereste mit der Wertigkeit n, bevorzugt Halogenid, Sulfat, Nitrat, Carbonat, Silikat, Phosphat oder Borat
a: eine Zahl von 2 bis 4, bevorzugt etwa 3,
b: eine Zahl von 1 bis 3, bevorzugt etwa 2,
wobei weiterhin gilt
a:b ist eine Zahl im Bereich von 1:1 bis 3:1, bevorzugt etwa 3:2 sowie
n·m ist eine Zahl von 0 bis 6, bevorzugt eine Zahl kleiner 4 und insbesondere eine Zahl kleiner 1

18. Fließ- und pumpfähige Arbeitsmittel nach Anspruch 17, dadurch gekennzeichnet, daß sie als wasserbasierte Bohrspülungen vom O/W-Emulsionstyp ausgebildet sind, die als disperse Ölphase insbesondere umweltverträgliche Öle - bevorzugt aus den Klassen der oleophilen Alkohole, Ether, Ester von Mono- und/oder Polycarbonsäuren und/oder Kohlensäureester - enthalten.

## Claims

1. The use of mixed hydroxide compounds of divalent and trivalent metals having a 3-dimensional space lattice structure of the garnet type corresponding to general formula (I):
M^{II} ₐ M^{III} _{b} (OH)_{2a+3b-n·m} Aⁿ ₘ (I)
in which:
M^{II} = Ca, Mg, Zn, Cu, Ba, Sr, Fe, Mn and/or Co
M^{III} = Al, Fe, Cr and/or Ga
A = monobasic and/or polybasic acid groups with the valency n, preferably halide, sulfate, nitrate, carbonate, silicate, phosphate or borate
a = a number of 2 to 4 and preferably about 3
b = a number of 1 to 3 and preferably about 2.
the ratio of a to b being in the range from 1:1 to 3:1 and preferably of the order of 3:2 and
the product of n·m being a number of 0 to 6, preferably below 4 and, more particularly, below 1,
for controlling the thixotropic thickening of aqueous preparations by means of swellable clays and/or other swellable layer silicate compounds of natural and/or synthetic origin.

2. The use claimed in claim 1, characterized in that katoites having the basic structure Ca₃Al₂(OH)₁₂ are used in which a small percentage of the OH functions may even be replaced by preferably inorganic acid groups and, more particularly, are replaced by equivalent quantities of silicate residues and in which a small percentage of the calcium and/or aluminium may be replaced by other divalent or trivalent metals.

3. The use claimed in claim 1 or 2, characterized in that katoites corresponding to the above formula are used in which the calcium content is partly replaced by magnesium, the magnesium component preferably corresponding substantially to the magnesium content of the calcium compound used in the synthesis of the katoites.

4. The use claimed in claims 1 to 3, characterized in that katoites covering the range from Ca₃Al₂(OH)₁₂ to Ca₃Al₂(OH)₈(SiO₄) are used, preference being attributed to low-(SiO₄) katoites in which the equivalent SiO₄ content corresponds on average to no more than about one OH group and, in particular, to no more than about 0.5 OH groups, based on the crystalline unit cell Ca₃Al₂(OH)₁₂.

5. The use claimed in claims 1 to 4, characterized in that mixed hydroxide compounds with particle sizes of not more than about 250 µm, preferably in the range from about 0.01 to 100 µm and more preferably in the range from about 0.1 to 30 µm are used.

6. The use claimed in claims 1 to 5, characterized in that the controllers are used in the form of, in particular, aqueous suspensions and/or as powder-form solids.

7. The use claimed in claims 1 to 6, characterized in that the controllers are used together with natural and/or synthetic swellable clays and/or layer silicate compounds.

8. The use claimed in claims 1 to 7, characterized in that the controllers are used together with, in particular, water-soluble and/or water-swellable polymer compounds of natural and/or synthetic origin, temperature-stable polymer compounds being particularly preferred.

9. The use claimed in claims 1 to 8, characterized in that the controllers are used together with basic oxides and/or hydroxides of, in particular, polyvalent metals, preferably with corresponding components of Mg, Ca, Zn, Al and/or Fe.

10. The use claimed in claims 1 to 9, characterized in that the controllers with their 3-dimensional space lattice structure are used in ratios of controller to day of 0.02:1 to 2:1 and preferably 0.1:1 to 1:1 for thickening the aqueous preparations of synthetic and/or natural inorganic viscosity generators, more particularly swellable clays.

11. The use claimed in claims 1 to 10, characterized in that the controllers are used to thicken aqueous preparations of bentonite and/or attapulgite, more particularly of natural origin, and/or hectorite, more particularly of synthetic origin.

12. The use claimed in claims 1 to 11, characterized in that combinations of katoites and inorganic viscosity generators, preferably synthetic and highly swellable hectorites, are used for controlling the viscosity of clay suspensions, more particularly aqueous bentonite suspensions.

13. The use claimed in claims 1 to 12, characterized in that the controllers are used to control the rheology of water-based fluids in the earthworking field and, more particularly, to control the rheology of water-based fluids for geological drilling operations.

14. An additive for adjusting and/or controlling the rheology and gel strength of aqueous liquid phases which are thickened, preferably thixotropically, using synthetic and/or natural mineral compounds, more particularly swellable clays and/or other layer silicate compounds, characterized in that they contain as controllers fine-particle mixed hydroxide compounds of divalent and trivalent metals with a 3-dimensional space lattice structure of the garnet type corresponding to formula (I):
M^{II} ₐ M^{III} _{b} (OH)_{2a+3b-n·m} Aⁿ ₘ (I)
in which:
M^{II} = Ca, Mg, Zn, Cu, Ba, Sr, Fe, Mn and/or Co
M^{III} = Al, Fe, Cr and/or Ga
A = monobasic and/or polybasic acid groups with the valency n, preferably halide, sulfate, nitrate, carbonate, silicate, phosphate or borate
a = a number of 2 to 4 and preferably about 3
b = a number of 1 to 3 and preferably about 2.
the ratio of a to b being in the range from 1:1 to 3:1 and preferably of the order of 3:2 and
the product of n·m being a number of 0 to 6, preferably below 4 and, more particularly, below 1,
and other inorganic and/or organic auxiliaries for adjusting and/or controlling the flow behavior or gelation of aqueous phases.

15. An additive as claimed in claim 14, characterized in that swellable natural and/or synthetic mineral compounds, such as bentonite or attapulgite, but especially highly swellable layer silicates of the hectorite and/or saponite type, are present together with the katoite-based controllers.

16. An additive as claimed in claims 14 to 15, characterized in that controller systems of katoite and less than 50% by weight, preferably no more than 30% by weight and, most preferably, about 5 to 20% by weight of swellable synthetic hectorite are present.

17. Water-based flowable and pumpable working fluids thickened with viscosity generators based on swellable clay minerals or layer silicates of natural and/or synthetic origin and optionally containing other dissolved, emulsified and/or suspended auxiliaries, more particularly auxiliary fluids for use in terrestrial drilling and/or well sinking operations, characterized in that, together with the swellable viscosity generators, they contain mixed hydroxide compounds of 2-valent and 3-valent metals with a 3-dimensional space lattice structure of the garnet type corresponding to formula (I):
M^{II} ₐ M^{III} _{b} (OH)_{2a+3b-n·m} Aⁿ ₘ (I)
in which:
M^{II} = Ca, Mg, Zn, Cu, Ba, Sr, Fe. Mn and/or Co
M^{III} = Al, Fe, Cr and/or Ga
A = monobasic and/or polybasic acid groups with the valency n, preferably halide, sulfate, nitrate, carbonate, silicate, phosphate or borate
a = a number of 2 to 4 and preferably about 3
b = a number of 1 to 3 and preferably about 2.
the ratio of a to b being in the range from 1:1 to 3:1 and preferably of the order of 3:2 and
the product of n·m being a number of 0 to 6, preferably below 4 and, more particularly, below 1.

18. Flowable and pumpable working fluids as claimed in claim 17, characterized in that they are in the form of water-based drilling fluids of the o/w emulsion type containing oils, particularly ecologically safe oils, preferably from the classes of oleophilic alcohols, ethers, esters of mono- and/or polycarboxylic acids and/or carbonic acid esters as the disperse oil phase.

## Revendications

1. Utilisation de composés d'hydroxydes mixtes de métaux bivalents et trivalents ayant une structure de réseau spatiale tridimensionnelle du type grenat, de formule générale suivante (I)
M^{II} ₐ M^{III} _{b} (OH)_{2a+3b-n^{·}m} Aⁿ ₘ (I)
signifiant :
M^{II} : Ca, Mg, Zn, Cu, Ba, Sr, Fe, Mn, et/ou Co
M^{III} : Al, Fe, Cr, et/ou Ga
A : radical d'acide mono- et/ou plurivalent avec la valence n, de préférence un halogénure, un sulfate, un nitrate, un carbonate, un silicate, un phosphate ou un borate
a : un nombre allant de 2 à 4, de préférence environ 3,
b : un nombre allant de 1 à 3, de préférence environ 2,
dans laquelle en outre on a la valeur :
a:b est un nombre dans la zone de 1:1 à 3:1, de préférence environ 3:2 ainsi que
n^{·}m est un nombre allant de 0 à 6, de préférence un nombre plus petit que 4, et en particulier un nombre plus petit que 1,
en tant que régulateur de l'épaississement thixotrope de préparations aqueuses au moyen d'argiles aptes au gonflement et/ou d'autres dérivés de silicates lamellaires aptes au gonflement, d'origine naturelle et/ou synthétique.

2. Utilisation selon la revendication 1,
caractérisée en ce que
comme composés d'hydroxydes mixtes, des katoites de structure de base Ca₃Al₂(OH)₁₂ sont mises en oeuvre dont les éléments OH peuvent être échangés pour une quantité inférieure également contre des radicaux d'acide minéraux de préférence et pour cela sont remplacés par des quantités équivalentes de radicaux silicate et dans lesquels en outre aussi des quantités inférieures de calcium et/ou d'aluminium peuvent être échangées contre d'autres métaux bivalents ou trivalents.

3. Utilisation selon les revendications 1 ou 2,
caractérisée en ce que
des katoites de formule indiquée sont mises en oeuvre dont la teneur en calcium est échangée partiellement contre du magnésium, dans lesquels la quantité de magnésium correspond à peu près, de préférence à la quantité de magnésium du composé de calcium mis en oeuvre pour la synthèse de la Katoite.

4. Utilisation selon les revendications 1 à 3,
caractérisée en ce que
des catoites de la zone de Ca₃Al₂(OH)₁₂ à Ca₃AL₂(OH)₈(SiO₄) sont mises en oeuvre, pour lesquelles des katoites pauvres en (SiO₄) sont préférées, dont la teneur en SiO₄ équivalente correspond en moyenne à pas plus qu'environ un groupe OH, en particulier pas plus qu'environ 0,5 groupe rapporté à l'unité de base cristalline Ca₃Al₂(OH)₁₂.

5. Utilisation selon les revendications 1 à 4,
caractérisée en ce que
des composés d'hydroxyde mixte sont mis en oeuvre avec des tailles de particules pas au-dessus d'environ 250 µm, de préférence dans la zone d'environ 0,01 à 100 µm et en particulier dans la zone d'environ 0,1 à 30 µm.

6. Utilisation selon les revendications 1 à 5,
caractérisée en ce que
le régulateur est amené à l'utilisation sous forme en particulier de suspensions aqueuses et/ou en tant que poudre de produit solide.

7. Utilisation selon les revendications 1 à 6,
caractérisée en ce que
les régulateurs sont mis en oeuvre conjointement avec des argiles aptes au gonflement et/ou des composés de silicate lamellaire naturels ou synthétiques.

8. Utilisation selon les revendications 1 à 7,
caractérisée en ce que
les régulateurs sont utilisés conjointement avec des composés polymères en particulier solubles dans l'eau et/ou aptes au gonflement dans l'eau d'origine naturelle et/ou synthétique, pour lesquels l'utilisation de composés polymères stables à la température peut être particulièrement préférée.

9. Utilisation selon les revendications 1 à 8,
caractérisée en ce que
les régulateurs sont mis en oeuvre conjointement avec des oxydes et/ou des hydroxydes basiques en particulier de métaux plurivalents, de préférence avec les composants correspondants du Mg, Ca, Zn, Al et/ou Fe.

10. Utilisation selon les revendications 1 à 9,
caractérisée en ce que
pour l'épaississement des préparations aqueuses d'agents formateurs de viscosité minéraux, synthétiques et/ou naturels, en particulier des argiles aptes au gonflement, on met en oeuvre des régulateurs ayant une structure de réseau spatiale tridimensionnelle en rapport quantitatif régulateur/argile dans la zone de 0,02/1 à 2/1, de préférence dans la zone de 0,1/1 à 1/1.

11. Utilisation selon les revendications 1 à 10,
caractérisée en ce que
les régulateurs sont mis en oeuvre pour l'épaississement de préparations aqueuses de bentonite et/ou d'attapulgite en particulier respectivement d'origine naturelle, et/ou d'hectorite, ici en particulier d'origine synthétique.

12. Utilisation selon les revendications 1 à 11,
caractérisée en ce que
des combinaisons de Katoite et d'agents minéraux formateurs de viscosité, de préférence des hectorites synthétiques et fortement aptes au gonflement, sont mises en oeuvre pour la régulation de la viscosité de suspension d'argile, en particulier de suspension aqueuses de bentonite.

13. Utilisation selon les revendications 1 à 12,
caractérisée en ce que
les régulateurs sont mis en oeuvre pour le contrôlé de la rhéologie de produits basés sur l'eau, choisis dans le domaine des travaux de terrassement, et ainsi en particulier pour le contrôle de la rhéologie de systèmes de boues aqueux choisis dans le domaine des forages géologiques.

14. Additif pour l'ajustement et/ou le réglage de la rhéologie et de la consistance de gel de phases liquides aqueuses qui sont épaissies par utilisation conjointe de composés minéraux synthétiques et/ou naturels, en particulier des argiles et/ou d'autres composés de silicate lamellaire aptes au gonflement, de préférence d'une manière thixotrope,
caractérisé en ce qu'
il renferme comme régulateur des composés d'hydroxyde mixte le plus finement divisés de métaux bivalents et trivalents ayant une structure de réseau spatiale tridimensionnelle du type grenat, de formule suivante :
M^{II} ₐ M^{III} _{b} (OH)_{2a+3b-n^{·}m} Aⁿ ₘ (I)
signifiant :
M^{II} : Ca, Mg, Zn, Cu, Ba, Sr, Fe, Mn, et/ou Co
M^{III} : Al, Fe, Cr, et/ou Ga
A : radical d'acide mono- et/ou plurivalent avec la valence n, de préférence un halogénure, un sulfate, un nitrate, un carbonate, un silicate, un phosphate ou un borate
a : un nombre allant de 2 à 4, de préférence environ 3,
b : un nombre allant de 1 à 3, de préférence environ 2,
dans laquelle en outre on a la valeur :
a:b est un nombre dans la zone de 1:1 à 3:1, de préférence environ 3:2 ainsi que
n^{·}m est un nombre allant de 0 à 6, de préférence un nombre plus petit que 4, et en particulier un nombre plus petit que 1,
ainsi que d'autres adjuvants minéraux et/ou organiques pour l'ajustement et/ou la régulation du comportement à l'écoulement ou de la gélification des phases aqueuses.

15. Additif selon la revendication 14,
caractérisé en ce que
conjointement avec les régulateurs à base de Katoite, des composés minéraux naturels et/ou synthétiques, aptes au gonflement comme la bentonite ou l'attapulgite, en particulier cependant des silicates lamellaires à haut pouvoir de gonflement du type de l'hectozite et/ou de la saponite, sont présents.

16. Additif selon les revendications 14 à 15,
caractérisé en ce que
des systèmes de régulateurs à base de Katoite et de moins de 50 % en poids, de préférence de pas plus de 30 % en poids et en particulier d'environ 5 à 20 % en poids d'hectorinte synthétique apte au gonflement sont présents.

17. Substances actives aptes à l'écoulement et au pompage basées sur l'eau et épaissies avec des agents formateurs de viscosité, à base de matériaux argileux aptes au gonflement ou de silicates lamellaires d'origine naturelle et/ou synthétique, ainsi que renfermant si désiré d'autres adjuvants dissous, émulsionnés et/ou mis en suspension, pour l'utilisation dans le cadre d'excavation dans le sol et/ou de forages dans le sol,
caractérisées en ce qu'
elles renferment conjointement avec les agents formateurs de viscosité aptes au gonflement, des composés d'hydroxydes mixtes de métaux di et trivalents avec une structure de réseau spatiale tridimensionnelle du type grenat de formule suivante (I),
M^{II} ₐ M^{III} _{b} (OH)_{2a+3b-n^{·}m} Aⁿ ₘ (I)
signifiant :
M^{II} : Ca, Mg, Zn, Cu, Ba, Sr, Fe, Mn et/ou Co
M^{III} : Al, Fe, Cr, et/ou Ga
A : radical d'acide mono- et/ou plurivalent avec la valence n, de préférence un halogénure, un sulfate, un nitrate, un carbonate, un silicate, un phosphate ou un borate
a : un nombre allant de 2 à 4, de préférence environ 3,
b : un nombre allant de 1 à 3, de préférence environ 2,
dans laquelle en outre on a la valeur :
a : b est un nombre dans la zone de 1:1 à 3:1, de préférence environ 3:2 ainsi que
n^{·}m est un nombre allant de 0 à 6, de préférence un nombre plus petit que 4, et en particulier un nombre plus petit que 1.

18. Substances actives aptes à l'écoulement et au pompage selon la revendication 17,
caractérisées en ce qu'
elles sont formées comme boues de forage basées sur l'eau du type d'émulsion O/W, qui renferment comme phase huileuse disperse en particulier des huiles compatibles avec l'environnement, de préférence choisis dans les classes des alcools oléophiles, des éthers, des esters d'acide mono et/ou polycarboxylique et/ou des esters d'acide carbonique.
